# DEMANDE DE BREVET EUROPEEN

(11) **EP 1 106 846 A1**
(43) Date de publication de la demande: **13.06.2001**
(21) Numéro de dépôt: 99403038.5
(22) Date de dépôt: 06.12.1999
(51) Int. Cl.: F16B 21/16

(54) **Dispositif pour l'immobilisation réversible d'un arbre par une clavette tangentielle**

(71) Demandeur: Borgi, Richard, 21024 Dijon cedex (FR)
(72) Inventeur: Borgi, Richard, 21024 Dijon cedex (FR)
(74) Mandataire: Puiroux, Guy

(57) **Abrégé**

Dispositif d'assemblage d'un arbre (1) coulissant dans un alésage (2) dans une pièce (3) au moyen d'une clavette tangentielle (4) ayant une forme générale de révolution avantageusement cylindrique autour d'un axe longitudinal remarquable en ce que la clavette (4) est partiellement évidée sur une partie (11) de sa longueur et peut atour ou le long de son axe pivoter ou se translater juste dans un trou (5) de même section effectué dans la même pièce (3) d'axe orthogonal à l'arbre (1) et à une distance e de celui-ci strictement inférieure au rayon de la clavette et pouvant être nulle de façon à occuper deux positions stables:
- une première position dans laquelle la clavette (4) n'offre aucun obstacle au glissement axial A de l'arbre (1) dans son alésage (2),
- une deuxième position dans laquelle une partie (11) de la clavette (4) s'encastre dans une gorge (7) de l'arbre (1) pour l'immobiliser.

## Description

L'invention concerne un dispositif d'immobilisation réversible d'un arbre coulissant juste à l'intérieur d'un alésage au moyen d'une clavette partiellement évidée et pouvant pivoter ou se translater entre deux positions stables pour laisser l'arbre libre dans son alésage ou au contraire le bloquer axialement et le cas échéant, en rotation.

On connaît déjà des dispositifs permettant un assemblage cylindrique utilisant notamment des clavettes transversales ou tangentielles.

Les clavettes transversales sont bien connues pour procurer une immobilisation en rotation et en translation de deux pièces coaxiales ; pour ce faire on utilise classiquement soit une clavette ronde dont la plus connue est la goupille fendue. Naturellement pour obtenir un serrage plus efficace, on pourra remplacer la clavette cylindrique par une clavette tronconique ou encore une clavette ronde présentant suivant une de ses génératrices un plat ou une pente.

Les clavettes tangentielles "rondes" ou du type "vélo", largement utilisées pour le montage des manivelles de pédalier de vélo, permettent d'assembler en rotation et en translation un arbre dans un alésage en introduisant la clavette tangentiellement et perpendiculairement à l'arbre de telle manière qu'elle joue le rôle d'un coin grâce à un plat usiné en biais sur la clavette qui procure un serrage d'autant plus vigoureux que l'on enfonce plus profondément la clavette contre l'arbre. Tous ces dispositifs connus sont utilisés pour réaliser des assemblages définitifs et en tout cas permanents, même s'ils sont susceptibles de démontage en chassant la clavette de son logement. Ces dispositifs sont donc inaptes dans tous les cas ou l'on désire un assemblage réversible facilement démontable sans qu'en outre il ne soit nécessaire de recourir à un outil tel que chasse-clavette.

D'un autre côté, l'assemblage par clavette transversale ou tangentielle ne permet en aucun cas de limiter l'assemblage au seul blocage axial de l'arbre dans son alésage en lui donnant la possibilité avantageuse de tourner sur lui-même.

Pour palier tous les inconvénients précités, il est proposé conformément à l'invention un dispositif de blocage/déblocage rapide d'un arbre coulissant juste à l'intérieur d'un alésage dans une pièce au moyen d'une clavette tangentielle ayant une forme générale de révolution avantageusement cylindrique autour d'un axe longitudinal remarquable en ce que la clavette est partiellement évidée sur une partie de sa longueur et peut autour ou le long de son axe pivoter ou se translater juste dans un trou de même section effectué dans la même pièce d'axe orthogonal à une même génératrice de l'arbre et à une distance de celui-ci strictement inférieure au rayon de la clavette pouvant être nulle, de façon à occuper deux positions stables :
- une première position dans laquelle la clavette n'offre aucun obstacle au glissement axial de l'arbre dans son alésage,
- une deuxième position dans laquelle la partie de la clavette correspondant à l'évidement s'encastre en partie dans une gorge circulaire usinée dans l'arbre selon un profil transversal adéquat, pour l'immobiliser au moins axialement.

Selon une première variante de l'invention, la clavette est cylindrique et présente un évidement hémicylindrique de part et d'autre du point de tangence à l'intersection de son axe longitudinal et d'une génératrice de l'arbre, sur une longueur au moins suffisante pour que, lorsque la partie hémicylindrique pleine de la clavette est entièrement maintenue au-dessus de ladite génératrice, l'arbre dans son mouvement de translation axial n'ait aucun contact avec ladite clavette.

On comprend bien maintenant que si l'on opère une rotation de la clavette sur elle-même, lorsque l'arbre est positionné dans son alésage de telle manière que la gorge circulaire vienne au droit de l'axe de la clavette qui se trouve alors dans le plan médian de la gorge circulaire, on engage progressivement la partie hémicylindrique pleine résultant de la partie évidée de la clavette, à l'intérieur de la gorge créant du même coup un obstacle au mouvement axial de l'arbre dans son alésage ; on voit bien que le blocage optimum de l'arbre intervient au moment où l'encastrement de la partie hémicylindrique de la clavette est maximum à l'intérieur de la gorge de l'arbre.

Selon une première exécution de l'invention, la gorge circulaire de l'arbre a un profil hémitorique dont la section transversale est par conséquent semi-circulaire. Selon cette exécution particulièrement avantageuse, l'arbre est effectivement bloqué dans ses mouvements axiaux ; en revanche, si on laisse un jeu fonctionnel suffisant entre la clavette tangentielle et la gorge de l'arbre, on peut encore opérer une rotation de l'arbre sur lui-même ce qui, dans de nombreuses applications, constitue un réel avantage.

Inversement et selon une autre configuration de l'exécution, la gorge circulaire prévue dans l'arbre pour coopérer avec la clavette tangentielle, a un profil dont la section transversale est une demi-ellipse dont le grand diamètre correspond à la largeur de la gorge qui est égale au diamètre de la clavette cylindrique, et dont le petit rayon coïncide avec la profondeur de la gorge.

Selon cette exécution tout à fait avantageuse, il est possible comme précédemment d'engager la partie hémicylindrique pleine de la clavette par rotation de celle-ci sur elle-même à l'intérieur de la gorge circulaire de l'arbre sans difficulté puisque la largeur de la gorge est identique au diamètre de la clavette cylindrique ; dès qu'on poursuit par rotation son encastrement, celle-ci vient alors en contact progressivement avec les parois de la gorge de section elliptique et procure finalement un serrage d'autant plus conséquent que la profondeur de la gorge est faible. On voit bien l'intérêt de cette variante par rapport à la précédente, à savoir que le blocage axial de l'arbre dans son alésage est maintenant complété par un blocage en rotation dû au serrage de la clavette sur le fond de la gorge de l'arbre. Un autre avantage de cette exécution, est qu'on peut engager l'opération de blocage axial et en rotation en agissant sur la clavette tangentielle dans un sens ou dans l'autre.

Selon une autre exécution de l'invention répondant à une nécessité de bloquer l'axe axialement sans doute, mais également en rotation et selon un serrage progressif, il est prévu de donner au profil de la gorge circulaire de l'arbre pour coopérer avec la clavette tangentielle hémicylindrique, un profil ovoïde dont la section transversale est une courbe continue dont le rayon, centré sur le point de tangence à l'intersection de l'axe de la clavette et de la génératrice de l'arbre, varie d'un bord à l'autre entre une première valeur R égale au rayon de la clavette cylindrique et une deuxième valeur r inférieure à R.

On comprend bien qu'ici, plus l'écart entre R et r est grand et plus le blocage final de l'arbre sera important. Il suffit dont d'engager comme dans les variantes précédentes la partie hémicylindrique pleine de la clavette tangentielle à l'intérieur de la gorge du côté où le bord de celle-ci coïncide avec le bord de la partie hémicylindrique de la clavette au repos, puis de continuer, dans le même sens la rotation de la clavette qui viendra progressivement en contact de plus en plus serré avec l'intérieur de la gorge dont le rayon diminue constamment.

Bien entendu, une autre exécution secondaire de la précédente consiste à prévoir un engagement de la partie hémicylindrique de la clavette dans la gorge de l'arbre dont la section transversale du profil est d'abord en arc de cercle sur un secteur d'angle suffisant, avantageusement π / 2, pour que cet engagement sans frottement soit suffisant pour un blocage axial (permettant comme on l'a vu dans la première exécution une certaine liberté dans la rotation de l'arbre) ; puis au-delà, le rayon de courbure de la section transversale diminue continûment selon un arc de spirale jusqu'à l'autre bord de la gorge circulaire pour atteindre comme dans l'exécution principale la valeur r.

On remarquera que dans les deux dernières exécutions, contrairement à la précédente, le sens de rotation de la clavette en vue du blocage de l'arbre est unique puisque seul un des deux bords de la clavette coïncide avec l'entrée de la gorge, l'autre bord venant en retrait par rapport au plat de la clavette évidée.

Selon une deuxième variante de l'invention, la clavette peut être soit cylindrique soit en forme partielle de prisme droit avantageusement régulier ; à l'inverse de la clavette précédente, dans cette variante la clavette fonctionne suivant un mouvement unique de translation dans son alésage qui est disposé perpendiculairement à l'axe de l'arbre que l'on entend bloquer ou libérer ; naturellement, comme dans la première variante, la clavette vient coopérer avec une gorge circulaire de l'arbre qu'elle vient totalement envahir en position de blocage et au contraire totalement libérer au moyen d'un évidement adéquat qui vient par translation épouser la forme extérieure du diamètre de l'arbre qui de ce fait est libre axialement dans son alésage.

Selon d'autres caractéristiques particulièrement avantageuses de l'invention, il est notamment prévu de donner à la gorge circulaire de l'arbre un profil transversal améliorant l'engagement de la clavette tangentielle qu'elle soit conforme à la première ou à la deuxième variante d'ailleurs.

D'autres avantages et caractéristiques ressortiront mieux de la description des deux variantes et de leurs principales exécutions conformes à l'invention, données à titre d'exemples non limitatifs, en référence aux dessins sur lesquels :

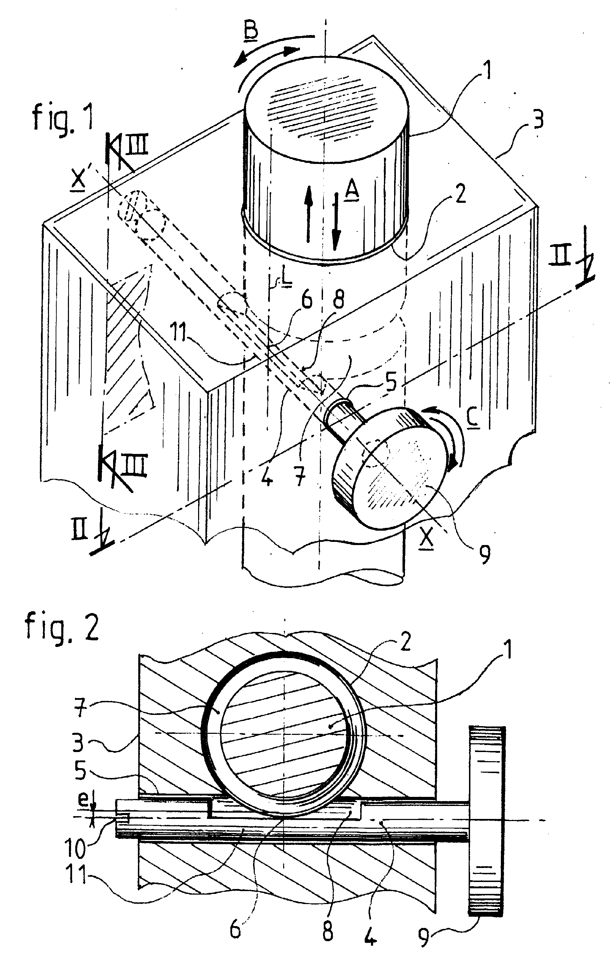

- la figure 1 est une vue en perspective d'un assemblage conforme à l'invention.
- la figure 2 est une vue en coupe II/II de la figure 1 suivant le plan médian de la gorge circulaire de l'arbre montrant également deux exemples d'organes d'entraînement en rotation de la clavette tangentielle évidée.

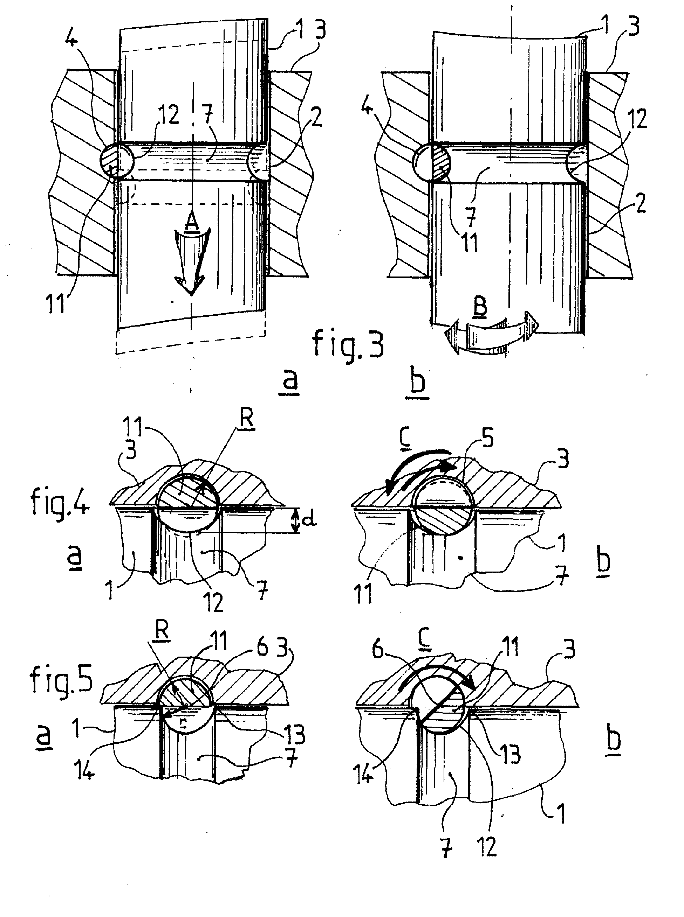

- la figure 3 est une vue en coupe verticale III/III de la figure 1 de l'assemblage dans un plan perpendiculaire à la clavette et passant par l'axe de l'arbre : la figure 3a représente la clavette en position déverrouillée ; la figure 3b représente la clavette en position verrouillée, par encastrement dans la gorge circulaire de l'arbre.
- la figure 4 représente en demi-coupe partielle agrandie selon III/III une autre exécution de l'assemblage dans laquelle la gorge circulaire a un profil de section elliptique : la figure 4a correspond à la position déverrouillée de la clavette ; la figure 4b correspond à la position verrouillée serrée de la clavette sur l'arbre.

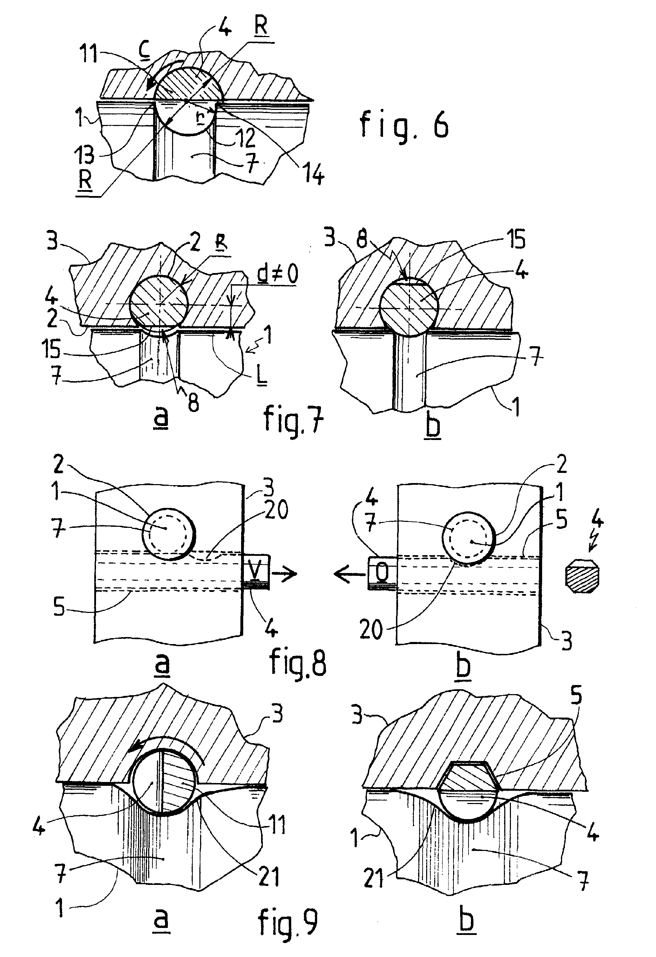

- la figure 5 représente en demi-coupe partielle agrandie selon III/III une troisième exécution de l'assemblage dans laquelle le rayon de la gorge circulaire de l'arbre est continûment décroissant d'un bord à l'autre de la gorge : la figure 5a représente la clavette déverrouillée ; la figure 5b représente une position intermédiaire de serrage entre la clavette et le fond de gorge de l'arbre.
- la figure 6 est une exécution particulière de la précédente.
- la figure 7 représente en demi-coupe partielle agrandie selon III/III une dernière exécution de l'assemblage en position verrouillée (figure 7a) et déverrouillée (figure 7b) dans laquelle l'axe de la clavette ne tangente plus une génératrice de l'arbre et elle se situe à une distance d strictement inférieure au rayon de la clavette.
- la figure 8 est une vue schématique de la deuxième variante selon l'invention, dans laquelle la clavette a un mouvement de translation pour opérer le verrouillage de l'arbre (figure 8a) ou son déverrouillage (figure 8b)
- la figure 9 est une représentation en demi-coupe partielle identique aux figures 4, 5, 6 et 7 montrant une exécution préférée de la gorge de l'arbre suivant un profil sans rupture de discontinuité ; en figure 9a il s'agit d'une représentation pour une clavette fonctionnant en rotation, en figure 9b il s'agit d'une clavette fonctionnant en translation.

En référence aux figures 1 à 3, l'assemblage conforme à une première variante de l'invention comprend un arbre 1 susceptible de s'ajuster dans un alésage 2 d'une pièce quelconque 3 ; l'arbre 1 peut ainsi coulisser axialement du haut vers le bas (flèches A) sur la figure 1 ou encore tourner (flèches B), autour de son axe, à gauche ou à droite. Le but de l'invention est d'immobiliser l'arbre 1 dans son alésage 2 par rapport à la pièce 3 soit en rotation soit axialement soit les deux.

Pour cela, on utilise une clavette cylindrique 4 montée sans jeu transversalement par rapport à l'axe de l'alésage 2 dans un autre alésage 5 de la pièce 3. En pratique, l'axe de la clavette 4 et par conséquent de l'alésage 5, se situe dans un plan perpendiculaire à l'axe de l'arbre 1 et il est tangent à l'une de ses génératrices L en un point d'intersection 6 représenté sur les figures 1 et 2. Naturellement, pour qu'il soit possible de monter l'arbre 1 et la clavette 4 dans les conditions de tangence évoquées au-dessus, il est nécessaire de prévoir une gorge circulaire 7 sensiblement centrée dans le plan transversal contenant la clavette 4 afin que celle-ci puisse s'y loger et constitue à ce moment là un obstacle n'autorisant plus de mouvement axial A de l'arbre 1 dans son alésage 2 ; on verra plus loin que le profil de la gorge 7 peut être diversement adapté suivant le type d'assemblage de l'arbre 1 à la pièce 3 que l'on souhaite obtenir.

Si l'on comprend bien que pour dégager axialement l'arbre 1 de son alésage 2 il suffirait de retirer la clavette 4 de la gorge 7, il est plus avantageux de créer de part et d'autre du point de tangence 6 un évidement 8 sur la clavette 4. On voit bien que si l'évidement 8 est effectué jusqu'au plan médian axial de la clavette 4 et sur une longueur suffisante pour dégager de part et d'autre de l'arbre 1 les parties restantes de la clavette 4, alors il est possible en effectuant une rotation de 180° de la clavette 4 de dégager intégralement la gorge 7 avec la conséquence de libérer axialement l'arbre 1 de la pièce 3 ; réciproquement, lorsqu'on veut bloquer axialement l'arbre 1 dans son alésage 2 il suffit d'effectuer une rotation de 180° de la clavette 4 amenant la partie hémicylindrique 11 pleine de la clavette 4 résultant de l'évidement 8, dans la gorge 7 pour créer à nouveau un blocage axial.

Avantageusement, la rotation de la clavette 4 pour bloquer et débloquer l'arbre 1 dans son alésage 2 peut se faire par un bouton moleté 9 ou par une extrémité fendue 10 (figure 2) pour coopérer avec un tournevis.

On remarquera sur les figures 1 et 2 que la partie hémicylindrique 11 de la clavette 4 doit être suffisante pour qu'en position telle que représentée sur la figure 2, l'arbre 1 puisse coulisser librement dans son alésage 2 ; la longueur de l'évidement 8 peut donc être limitée comme sur la figure 2 au dégagement de l'arbre 1 ou être plus commodément usinée jusqu'à l'extrémité de la clavette 4. Il est néanmoins plus avantageux de prévoir de part et d'autre de l'évidement 8 une portée cylindrique suffisante pour résister aux fléchissements de la clavette 4.

En référence à la figure 3 il sera maintenant décrit l'exécution la plus générale de l'assemblage conforme à l'invention ; ici il est uniquement recherché un blocage axial de l'arbre 1 en introduisant ou pas, par simple rotation de la clavette 4 la partie hémicylindrique 11 à l'intérieur de la gorge circulaire 7 dont le profil 12 est par conséquent hémi-torrique de rayon R identique à celui de la clavette 4 ; on voit donc en figure 3a que l'arbre peut se déplacer axialement suivant flèche A puisque la partie hémicylindrique 11 de la clavette 4 se trouve entièrement à l'extérieur de toute génératrice L de l'arbre 1 ; au contraire en figure 3b la clavette 4 a subit une rotation de 180° amenant la partie hémicylindrique 11 exactement à l'intérieur de la gorge 7, créant ainsi un obstacle au déplacement de l'arbre 1. On notera qu'une telle exécution présente un avantage déterminant puisque la gorge circulaire 7 de l'arbre 1 est facilement usinable.

Cet assemblage permet la rotation de l'arbre 1 sur lui-même puisque la partie hémicylindrique 11 de la clavette 4 peut se mouvoir librement dans la gorge 7 de forme homothétique. Dans les exécutions qui vont maintenant être décrites, on cherchera au contraire à assurer non seulement un blocage axial mais encore un blocage total ou partiel, ponctuel ou progressif, de la rotation de l'arbre 1.

En référence aux figures 4 où il est présenté une première exécution de ce type, seule la forme de la gorge 7 est modifiée par rapport à l'exécution générale de la figure 3. On donne à la gorge circulaire 7 de la l'arbre 1 un profil dont la section transversale n'est plus un demi-cercle mais une demi-ellipse dont le grand diamètre correspond à la largeur de la gorge 7 qui est, comme dans la variante générale, égale au diamètre R de la clavette 4 et dont le petit rayon r coïncide avec la profondeur de la même gorge 7.

En position de repos, la clavette 4 ayant sa partie hémicylindrique 11 à l'intérieur de la gorge 7, procure comme précédemment une totale liberté axiale de l'arbre 1 ; à l'inverse, une rotation de 180° à gauche ou à droite de la clavette 4 entraîne sa partie hémicylindrique 11 vers l'intérieur de la gorge 7 de profil semi-elliptique. On comprend bien alors qu'au fur à mesure de la rotation de la clavette 4, la partie 11 entre très vite en contact avec le fond de la gorge 7 puisque son rayon R est plus grand que le rayon r de fond de gorge ; à l'extrême, lorsque la partie hémicylindrique 11 de la clavette 4 est entièrement incluse dans la gorge 7 on comprend qu'une grande pression transversale s'exerce entre le fond de gorge 7 et la clavette 4 qui peut être légèrement repoussée vers l'extérieur de la gorge comme montré en figure 4b ; dans cette variante, il est important que la partie 11 de la clavette 4 soit entourée de parties cylindriques pour assurer une meilleure tenue au moment du serrage.

L'avantage de cette exécution est qu'elle procure un blocage de l'arbre 1 tant en translation qu'en rotation ; en outre, une telle solution permet d'obtenir simultanément les deux blocages sans qu'il soit nécessaire d'agir dans un sens de rotation particulier sur le bouton moleté 9 de la clavette 4 ; en revanche, une telle solution n'assure qu'un blocage relatif en rotation dans la mesure où le contact entre la clavette et la gorge est théoriquement ponctuel ; c'est pourquoi, en référence aux figures 5, il est proposé une exécution de l'assemblage permettant d'obtenir outre le blocage axial de l'arbre 1 mais encore son blocage en rotation par un serrage progressif. Pour cela, la gorge 7 sera usinée suivant un profil ovoïde dont la section transversale est une courbe continue dont le rayon centré sur le point de tangence 6 varie d'un bord 13 de la gorge à l'autre bord 14, entre une première valeur R égale au rayon de la clavette 4 et une deuxième valeur r inférieure à R ; on comprend alors que dans son déplacement, la partie hémicylindrique 11 de la clavette 4 nécessairement entraînée dans le sens de la flèche C de la figure 5b, vienne en pivotant autour du point de tangence 6 s'engager d'abord dans la gorge 7 dont la demi-largeur d'entrée est égale au rayon R de la clavette 4 ; en poursuivant son mouvement, la partie 11 vient progressivement au contact de la paroi de la gorge 7 dont le rayon de courbure diminue continûment jusqu'à une valeur r créant ainsi un serrage d'autant plus important que le déplacement en rotation suivant C est important. Le serrage est bien progressif mais nécessite un entraînement de la clavette 4 par son organe 9 dans un seul sens C ; l'entraînement en sens inverse est d'ailleurs impossible le bord 14 de la gorge 7 formant butée pour la partie hémicylindrique 11.

Selon enfin une exécution particulière de la variante précédente et en référence à la figure 6, il est apparu avantageux de modifier le profil 12 de la gorge 7 de manière que son rayon de courbure soit d'abord égal au rayon R de la clavette 4 et le reste sur un secteur d'angle, avantageusement 90°, à partir du bord d'entrée 13 de la gorge 7, diminue continûment ensuite jusqu'au bord 14 de sortie pour atteindre la valeur r.

Un tel dispositif a entre autre comme avantage par rapport à l'exécution précédente, de permettre à la partie hémicylindrique 11 un engagement coulissant sur 90° à l'intérieur de la gorge 7 procurant déjà un blocage axial minimum de l'arbre dans son alésage suivi dans un deuxième temps par un contre-serrage de plus en plus fort de la clavette 4 selon C (figure 6). Il est ainsi possible de positionner l'arbre en deux temps, d'abord axialement puis d'effectuer tous réglages voulus en rotation et enfin bloquer ce dernier mouvement en continuant la rotation de la clavette 4 dans le même sens. Naturellement, toute autre exécution visant à diminuer ou agrandir le secteur d'angle de la première phase de blocage ne sortirait pas du cadre de l'invention.

Il va de soi que toute modification des exécutions qui viennent d'être décrites au-dessus, visant par exemple à décaler le centre de la clavette 4 d'une distance d non nulle par rapport à une génératrice L de l'arbre 1 tel que schématisé sur les figures 7a et 7b, ne sortirait pas de l'invention dans la mesure où cette distance d resterait strictement inférieure au rayon r de la clavette 4. Dans cette exécution particulière, la clavette 4 présente un évidement 8 obtenu par une coupe suivant un plan parallèle à son axe longitudinal qui s'étend de part et d'autre de l'axe de l'arbre 1 sur une longueur au moins suffisante pour que, lorsque la partie plane 15 de l'évidement 8 est tangente à une génératrice L de l'arbre 1 ce dernier puisse être dégagé de son alésage 2 (figure 7a).

Il sera maintenant décrit la deuxième variante d'assemblage conforme à l'invention, dans lequel la clavette 4 n'agit plus en rotation mais en translation dans son alésage 5.

En référence aux figures 8 représentant schématiquement cette deuxième variante, la clavette 4 peut être translatée au travers de la pièce 3 traversée orthogonalement par un alésage 2 dans lequel vient l'arbre 1 qu'il convient de laisser libre ou de contrebloquer ; par un mouvement axial vers la droite (figure 8a) la clavette (4) bloque l'arbre (1) en ce qu'une partie de ladite clavette se trouve incorporée à l'intérieur de la gorge 7 de l'arbre 1, à l'instar de ce qui a été dit dans la variante précédente, et par un déplacement axial vers la gauche elle amène un évidement 20 en regard de l'arbre 1, dont le profil est apte à épouser la forme extérieure dudit arbre le dégageant ainsi de tout contact avec la clavette 4. A cet effet, l'évidement 20 à une forme qui peut résulter d'un fraisage cylindrique de rayon égal à celui de l'arbre 1 et d'axe perpendiculaire à celui de la clavette 4 progressant depuis sa surface sur une profondeur suffisante pour pouvoir libérer ledit arbre 1 en translation, lorsque la clavette 4 est en bonne position (figure 8b).

Accessoirement, on notera la nécessité pour la clavette 4 de n'avoir aucune rotation sur elle-même afin que l'évidement 20 soit toujours en exacte coïncidence avec l'arbre 1 pour pouvoir le dégager. Pour ce faire, il peut être avantageux de prévoir un dispositif anti-rotation (non représenté sur les figures) où bien de donner une forme à la clavette 4 l'empêchant de tourner. Ainsi, une forme polygonale telle que représentée à droite de la figure 8b procure-t-elle le résultat escompté. Naturellement, il suffit d'un simple méplat sur une clavette cylindrique correspondant avec un bossage dans l'alésage 5 pour parvenir également à ce résultat.

Selon une caractéristique accessoire très avantageuse de cette deuxième variante d'assemblage, on prévoit que la longueur de la clavette 4 soit supérieure à la largeur de la pièce 3 dans laquelle elle se translate d'une valeur telle que, débordant d'un côté de ladite pièce 3 et affleurant de l'autre, l'évidement 20 soit ou non en position de blocage de l'arbre 1 dans son alésage 2. Il est ainsi possible de disposer à l'extrémité débordante de la clavette 4 un repère visuel par exemple une couleur (vert, rouge), ou un marquage par exemple une lettre (V,O), indiquant dans quelle position stable se trouve l'arbre 1. Ce type de clavetage avec repère d'un côté et de l'autre de la clavette permet un assemblage rapide et très sécurisé puisque la partie débordante colorée ou marquée permet d'attester que le résultat est atteint.

Enfin et selon une dernière caractéristique fondamentale de l'invention intéressant l'une ou l'autre des deux variantes qui viennent d'être proposées et en référence aux figures 9, les bords 13,14 de la gorge 7 de l'arbre 1 sont raccordés aux génératrices L de l'arbre 1 suivant une courbe 21 dont le ou les rayons de courbure sont choisis pour que le raccordement soit progressif et sans rupture de continuité.

On comprend bien en effet, que lorsque la gorge 7 de l'arbre 1 a un profil suivant la courbe 21 des figures 9a ou 9b il n'est plus nécessaire de trouver la position exacte de la gorge 7 de l'arbre 1 pour coïncider avec l'évidement de la clavette 4 car la courbe 21 du profil de la gorge 7 contraint l'arbre à se centrer par rapport à la clavette 4 qui peut alors fonctionner tel que décrit ci-dessus ; il va de soi que le profil du fond de la gorge 7 reste en tous points identiques à ce qui a déjà été dit dans les variantes précédentes, par exemple circulaire tel que représenté sur les figures 9, mais également de toutes autres formes permettant de bénéficier des avantages décrits en référence aux figures 4,5 ou 6.

Il sera enfin observé que les éléments constituant les assemblages conformes à l'invention, peuvent être réalisés aussi bien en une matière plastique telle que le Plexiglas ou tout métal permettant de réaliser les usinages tels que décrits au-dessus.

L'assemblage selon l'une ou l'autre des variantes ou exécutions telles que décrites ci-dessus est notamment applicable au matériel de contention par exemple destiné à la radiothérapie qui nécessite de caler axialement et en rotation de nombreux accessoires pour le positionnement et le repositionnement d'un patient.

## Revendications

1. Dispositif de blocage/déblocage rapide d'un arbre (1) coulissant juste à l'intérieur d'un alésage (2) dans une pièce (3) au moyen d'une clavette tangentielle (4) ayant une forme générale de révolution avantageusement cylindrique autour d'un axe longitudinal XX' **caractérisé** en ce que la clavette (4) est partiellement évidée sur une partie (11) de sa longueur et peut autour ou le long de son axe pivoter ou se translater juste dans un trou (5) de même section effectué dans la même pièce (3) d'axe orthogonal à une génératrice (L) de l'arbre (1) et à une distance e de celle-ci (L) strictement inférieure au rayon R de la clavette pouvant être nulle, de façon à occuper deux positions stables :
- une première position dans laquelle la clavette (4) n'offre aucun obstacle au glissement axial A de l'arbre (1) dans son alésage (2),
- une deuxième position dans laquelle la partie (11) de la clavette (4) correspondant à l'évidement (8) s'encastre en partie dans une gorge circulaire (7) usinée dans l'arbre (1) selon un profil transversal (12) adéquat, pour l'immobiliser au moins axialement.

2. Dispositif selon la revendication 1 dans lequel la clavette (4) est cylindrique et pivotante et la distance d est nulle **caractérisé** en ce que la clavette (4) présente un évidement (8) hémicylindrique de part et d'autre du point de tangence (6) à l'intersection de son axe longitudinal et d'une génératrice (L) de l'arbre (1) sur une longueur au moins suffisante pour que lorsque la partie (11) hémicylindrique pleine résultant de l'évidement (8) de la clavette (4) est maintenue entièrement au-dessus de ladite génératrice (L) de l'arbre, celui-ci puisse être dégagé de son alésage (2).

3. Dispositif selon la revendication 2 procurant une immobilisation axiale de l'arbre (1) **caractérisé** en ce que la gorge circulaire (7) de l'arbre (1) est hémi-torrique, c'est-à-dire que la section transversale de son profil (12) est un demi-cercle centré au point de tangente (6) de l'axe de la clavette (4) et de la génératrice (L).

4. Dispositif selon la revendication 2 procurant une immobilisation ponctuelle axiale et en rotation de l'arbre (1) **caractérisé** en ce que la gorge (7) de l'arbre (1) a un profil (12) dont la section transversale est une demi-ellipse dont le grand diamètre correspond à la largeur de la gorge (7) qui est égale au diamètre R de la clavette cylindrique (4) et dont le petit rayon coïncide avec la profondeur d au centre de la gorge (7).

5. Dispositif selon la revendication 2 procurant une immobilisation progressive axiale et en rotation de l'arbre (1) **caractérisé** en ce que la gorge circulaire (7) de l'arbre (1) a un profil (12) ovoïde dont la section transversale est une courbe continue dont le rayon centré sur le point de tangence (6) varie d'un bord d'entrée (13) de la gorge (7) à l'autre (14), entre une première valeur R égale au rayon de la clavette (4) et une deuxième valeur r inférieure à R.

6. Dispositif selon la revendication 5 **caractérisé** en ce que la section transversale du profil (12) de la gorge (7) est d'abord en arc de cercle égal au rayon R de la clavette (4), sur un secteur d'angle suffisant, avantageusement π / 2, pour procurer un blocage axial, puis en arc de spirale dont le rayon de courbure diminue continûment depuis R pour atteindre une valeur r inférieure à R.

7. Dispositif selon la revendication 1 dans lequel la clavette (4) est cylindrique et pivotante et la distance e n'est pas nulle **caractérisé** en ce que la clavette (4) présente un évidement (8) obtenu par une coupe suivant un plan parallèle à son axe longitudinal qui s'étend de part et d'autre de l'axe de l'arbre (1) sur une longueur au moins suffisante pour que, lorsque la partie plane (15) de l'évidement (8) est tangente à une génératrice L de l'arbre (1), celui-ci puisse être dégagé de son alésage (2).

8. Dispositif selon l'une quelconque des revendications 2 à 7 **caractérisé** en ce que la clavette (4) est munie à l'une au moins de ses extrémités d'un organe (9,10) facilitant son entraînement en rotation sur elle-même, qui peut être un bouton moleté (9) ou une extrémité fendue (10) pouvant collaborer avec un tournevis.

9. Dispositif selon la revendication 1 dans lequel la clavette (4) peut être translatée juste dans le trou (5) **caractérisé** en ce que la clavette (4) comporte un évidement (20) de forme résultant d'un fraisage cylindrique de rayon égal à celui de l'arbre (1) et d'axe perpendiculaire à celui de la clavette (4), progressant depuis sa surface sur une profondeur suffisante pour libérer ledit arbre (1) en translation lorsque la clavette (4) est en première position.

10. Dispositif selon la revendication précédente **caractérisé** en ce que la longueur de la clavette (4) est supérieure à la largeur de la pièce (3) dans laquelle elle se translate d'une valeur telle que débordant d'un côté de la pièce (3) et affleurant de l'autre, l'évidement (20) coïncide exactement avec l'arbre pour le libérer (position première) et inversement (deuxième position correspondant au blocage de l'arbre (1)).

11. Dispositif selon la revendication précédente **caractérisé** en ce que l'extrémité débordante de la clavette (4) comporte un repère visuel tel qu'une couleur ou un marquage tel que lettre ou chiffre indiquant dans quelle position stable se trouve l'arbre (1).

12. Dispositif selon l'une quelconque des revendications 9 à 11 **caractérisé** en ce que la clavette (4) comporte un élément tel qu'un ou plusieurs méplats coopérant avec un ou plusieurs bossages dans l'alésage l'empêchant de tourner sur elle-même.

13. Dispositif selon l'une quelconque des revendications précédentes **caractérisé** en ce que les bords (13,14) de la gorge (7) de l'arbre (1) sont raccordés aux génératrices L de l'arbre (1) suivant une courbe (21) dont le ou les rayons de courbure sont choisis pour que le raccordement soit progressif et sans rupture de continuité.
